# EUROPÄISCHE PATENTSCHRIFT

(11) **EP 1 738 996 B1**
(45) Veröffentlichungstag und Bekanntmachung des Hinweises auf die Patenterteilung: **05.08.2009**
(21) Anmeldenummer: 06009497.6
(22) Anmeldetag: 09.05.2006
(51) Int. Cl.: B62D 35/00, B62D 37/02

(54) **Luftleitvorrichtung für ein Fahrzeug**
Air flow guiding device for a vehicle
Déflecteur aérodynamique pour un véhicule

(30) Priorität: 29.06.2005 DE 102005030203
(43) Veröffentlichungstag der Anmeldung: 03.01.2007
(60) Teilanmeldung: 09005858.7
(73) Patentinhaber: Dr. Ing. h.c. F. Porsche Aktiengesellschaft, 70435 Stuttgart (DE)
(72) Erfinder: Larson, Grant, 71642 Ludwigsburg (DE)

(56) Entgegenhaltungen:
- DE-A1- 19 741 321
- DE-A1-1102004 030 57
- US-A1- 667 265
- US-A1- 4 925 236

## Beschreibung

Die Erfindung betrifft eine Luftleitvorrichtung für ein Fahrzeug, insbesondere Personenwagen, gemäß dem Oberbegriff des Patentanspruchs 1.

DE19741321A1 offenbart ein Fahrzeug gemäβ dem Oberbegriff des Anspruchs 1.

Aus der DE 30 19 150 C2 geht eine Luftleitvorrichtung für ein Fahrzeug, insbesondere Personenwagen hervor, die in einem oben liegenden Heckbereich des Fahrzeuges angeordnet ist und ein Luftleitelement umfasst, das von einer Ruhestellung, in der es oberflächenbündig in den Formverlauf des Heckbereichs integriert ist, in eine ausgefahrene Betriebsstellung verlagerbar ist.

Das Luftleitelement wird bei dieser Anordnung durch einen umgekehrten einstückigen Tragflügel gebildet, der mittels einer Betätigungseinrichtung von der Ruhestellung in die Betriebsstellung bewegbar ist und umgekehrt.

Die DE 43 05 090 C2 offenbart eine Luftleitvorrichtung für ein Fahrzeug, die in einem Heckbereich des Fahrzeugs angeordnet ist und ein Luftleitelement umfasst, das von einer Ruhestellung in eine ausgefahrene Betriebsstellung verlagerbar ist. Das Luftleitelement wird durch einen Heckspoiler gebildet, der in einer versenkten Aufnahme der Fahrzeugkarosserie angeordnet und mittels einer Betätigungseinrichtung von einer eingefahrenen Ruhestellung in der er etwa oberflächenbündig mit der angrenzenden Fahrzeugkarosserie verläuft, in eine ausgefahrene Betriebsstellung verlagerbar ist.

Das einteilig ausgebildete Luftleitelement weist in der Ruhestellung und in der ausgefahrenen Betriebsstellung jeweils dieselbe Quererstreckung auf. Mit den eingangs beschriebenen Luftleitvorrichtungen wird der Luftwiderstandsbeiwert des Fahrzeuges (cw-Wert) verbessert und ein Abtrieb an der Hinterachse erzeugt.

Die US 4,925,236 zeigt ein Fahrzeug mit einer im Heckbereich angeordneten Luftleitvorrichtung, die sich aus einem am hinteren Rand des Heckdeckels angeordneten, sich in Fahrzeugquerrichtung erstreckenden feststehenden Heckspoiler und zwei separaten, in Fährzeuglängsrichtung ausgerichteten verschwenkbaren Heckfinnen zusammensetzt. Die beiden Heckfinnen bewirken in der hochgeschwenkten, schräg verlaufenden Wirkstellung, dass die Fahrstabilität des Fahrzeuges bei Schräganströmung (Seitenwind) verbessert wird.

Aufgabe der Erfindung ist es, eine Luftleitvorrichtung der eingangs genannten Gattung so weiterzubilden, dass die aerodynamischen Eigenschaften des Fahrzeuges, insbesondere der Abtrieb an der Hinterachse, noch weiter verbessert wird.

Erfindungsgemäß wird diese Aufgabe durch die Merkmale des Anspruchs 1 gelöst. Weitere die Erfindung in vorteilhafter Weise ausgestaltende Merkmale enthalten die Unteransprüche.

Die mit der Erfindung hauptsächlich erzielten Vorteile sind darin zu sehen, dass durch die Vergrößerung des Luftleitelements in Fahrzeugquerrichtung die wirksame aerodynamische Anströmfläche in der Betriebsstellung D vergrößert wird, wodurch insbesondere der Abtrieb des Fahrzeuges an der Hinterachse im Fahrbetrieb weiter erhöht wird. Das Luftleitelement erstreckt sich in der Betriebsstellung D nun auch beiderseits des mittigen Karosserieteils im Bereich der Seitenteile bzw. Kotflügel des Fahrzeuges.

Die Zeichnung zeigt ein Ausführungsbeispiel der Erfindung, das im folgenden näher beschrieben wird.

Es zeigt
- Fig. 1: eine perspektivische Ansicht von schräg vorne auf einen Heckbereich eines Fahrzeuges mit einer Luftleitvorrichtung, wobei ein Luftleitelement eine eingefahrene Ruhestellung A einnimmt,
- Fig. 2: eine Ansicht entsprechend Fig. 1, wobei das Luftleitelement eine hochgeschwenkte Zwischenstellung B einnimmt,
- Fig. 3: ein Ansicht entsprechend Fig. 2, wobei das Luftleitelement eine teilweise ausgefahrene Zwischenstellung C in Querrichtung einnimmt,
- Fig. 4: eine Ansicht entsprechend Fig. 2 in der vollständig ausgefahrenen Betriebsstellung D des Luftleitelements.

Ein Personenwagen 1 umfasst einen Aufbau 2, der im dargestellten Heckbereich 3 eine großflächige Scheibe 4 und ein dahinter liegend angeordnetes Karosserieteil 5 aufweist. Die Heckscheibe 4 und das Karosserieteil 5 sind an beiden Längsseiten 6 jeweils durch ein hinteres Seitenteil 7 begrenzt, an dem ein Fondseitenfenster 8 vorgesehen ist. An das hintere Ende 9 des Seitenteiles 7 schließt sich eine quer verlaufende Leuchteneinheit 10 an. Das Karosserieteil 5 und die Heckscheibe 4 können getrennt voneinander ausgebildet sein; sie können jedoch auch zu einer gemeinsamen Baueinheit zusammengefasst sein, die beispielsweise schwenkbar am Aufbau 2 gelagert ist. Im Ausführungsbeispiel wird das Karosserieteil 5 durch einen heckseitigen Motordeckel gebildet.

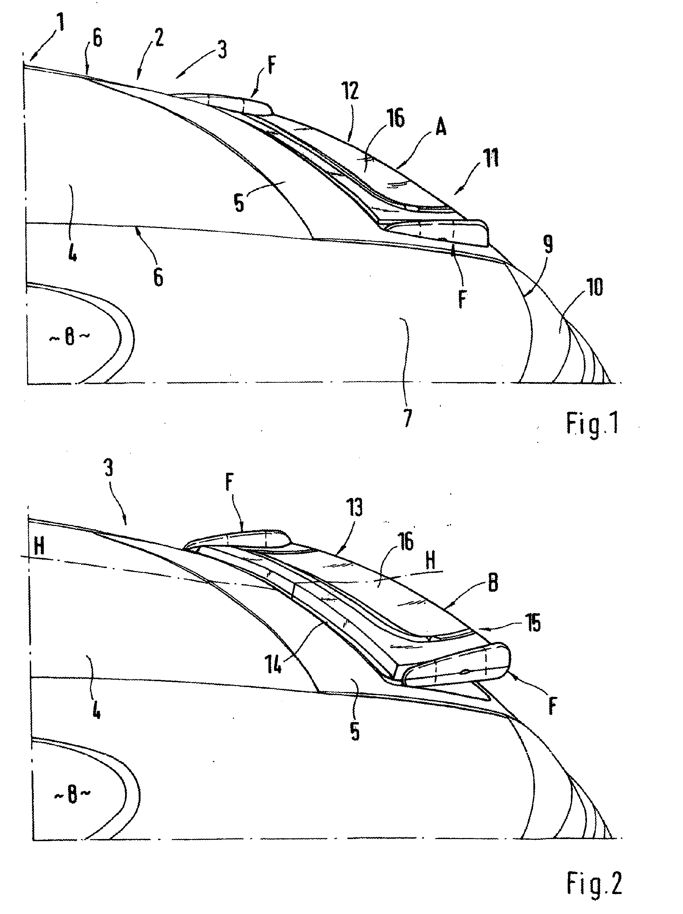

Am heckseitigen Karosserieteil 5 des fließheckartig ausgebildeten Heckbereichs 3 ist eine Luftleitvorrichtung 11 vorgesehen, die ein mit einer nicht näher dargestellten Betätigungseinrichtung zusammenwirkendes Luftleitelement 12 umfasst. Das Luftleitelement 12 ist von einer Ruhestellung A, in der es in den Formverlauf des Heckbereichs 3 etwa oberflächenbündig integriert ist, mittels der Betätigungseinrichtung über Zwischenstellungen B, C in eine ausgefahrene Betriebsstellung D verlagerbar und umgekehrt. In der Ruhestellung A ist das Luftleitelement 12 in einer versenkten Aufnahme des heckseitigen Karosserieteils 5 aufgenommen, wobei die Oberseite des Luftleitelements 12 etwa oberflächenbündig mit der angrenzenden Aufbaukontur verläuft. Das Luftleitelement 12 wird im Ausführungsbeispiel durch einen ausschwenkbaren Heckspoiler 13 gebildet, der an seinem vorne liegenden Ende 14 unter Vermittlung zumindest eines nicht näher dargestellten Scharniers gelenkig mit dem angrenzenden Karosserieteil 5 verbunden ist. Das hintere Ende 15 des Heckspoilers 13 wird beim Ausfahren der Luftleitvorrichtung 1 nach oben geschwenkt (Fig. 2).

Das verlagerbare Luftleitelement 12 könnte jedoch auch durch ein umgekehrtes Tragflügelprofil gebildet werden (nicht näher dargestellt).

Erfindungsgemäß ist vorgesehen, dass das Luftleitelement 12 in der ausgefahrenen Betriebsstellung D eine größere Quererstreckung aufweist als in der eingefahrenen Ruhestellung A. Erzielt wird dies dadurch, dass das verlagerbare Luftleitelement 12 - in Fahrzeugquerrichtung E-E gesehen - mehrteilig ausgebildet ist, wobei zumindest einzelne Teile der Luftleitvorrichtung 12 in Fahrzeugquerrichtung E-E bewegbar ausgebildet sind.

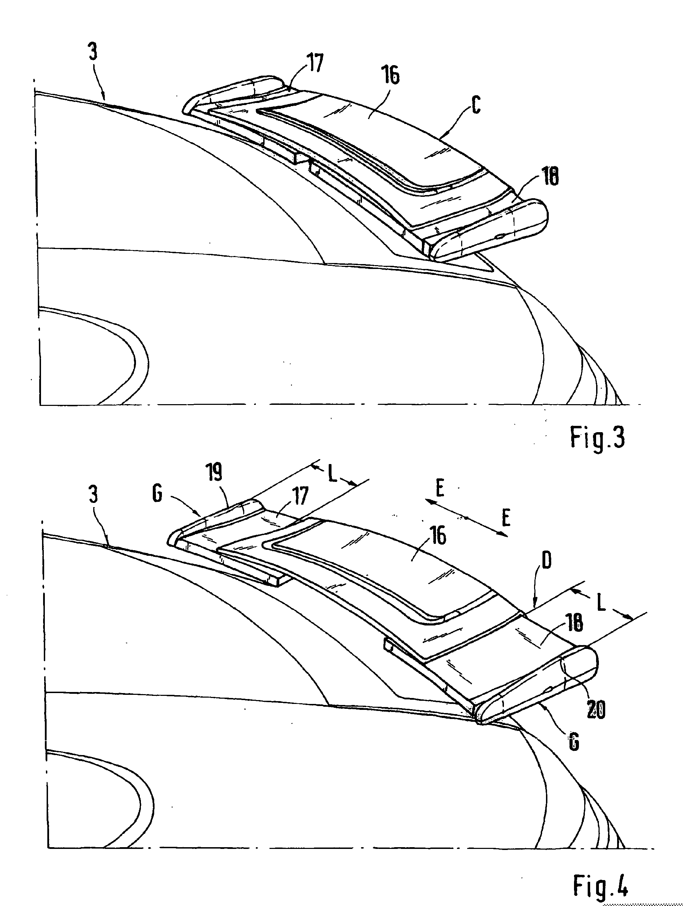

Gemäß einer ersten Ausführungsform weist das Luftleitelement 12 ein relativ breites Mittelteil 16 und zwei deutlich schmälere seitlich außenliegende Verlängerungsteile 17, 18 auf, wobei die beiden seitlichen Verlängerungsteile 17, 18 gegenüber dem Mittelteil 16 in Fahrzeugquerrichtung E-E bewegbar sind. Die beiden seitlichen Verlängerungsteile 17, 18 sind in der eingefahrenen Ruhestellung A des Luftleitelements 12 zumindest bereichsweise in das breitere Mittelteil 16 eingeschoben. Im Ausführungsbeispiel weisen die seitlichen Verlängerungsteile 17, 18 an ihren äußeren Enden jeweils in Fahrzeuglängsrichtung verlaufende aufrecht ausgerichtete Begrenzungsstege 19, 20 auf, die die Oberseite des Heckspoilers 13 nach oben hin überragen. Die seitlichen Verlängerungsteile 17, 18 sind über eine teleskopartige Schiebebewegung oder eine Klappbewegung von ihrer eingefahrenen Endstellung F (Fig. 1 u. 2) in ihre ausgefahrene Endstellung G (Fig. 4) verlagerbar und zwar über eine nicht näher dargestellte Antriebseinrichtung. Diese Verstellbewegung der seitlichen Verlängerungsteile 17, 18 in Fahrzeugquerrichtung erfolgt erst dann, wenn das komplette Luftleitelement 12 von der eingefahrenen Ruhestellung A in eine angehobene Zwischenstellung B bewegt wurde. In Fig. 3 sind die seitlichen Verlängerungsteile 17, 18 teilweise ausgefahren, wogegen Fig. 4 die vollständig ausgefahrene Betriebsstellung D des Luftleitelements 12 zeigt, d.h., die seitlichen Verlängerungsteile 17, 18 sind nun vollständig in Fahrzeugquerrichtung E-E ausgefahren und die Luftleitvorrichtung 11 weist eine größere Quererstreckung auf.

Die zweite Ausfahrbewegung des Luftleitelements 12 in Fahrzeugquerrichtung E-E kann elektromotorisch, pneumatisch, hydraulisch oder dergleichen erfolgen. In der Ruhestellung A sind die beiden schmalen seitlichen Verlängerungsteile 17, 18 nahezu vollständig in das breitere Mittelteil 16 eingeschoben; lediglich die beiden aufrechten längsgerichteten Begrenzungsstege 19, 20 befinden sich außerhalb des Mittelteiles 16.

Es müssen jedoch keine Begrenzungsstege 19, 20 an den Verlängerungsteilen 17, 18 vorgesehen sein.

Gemäß einer zweiten, nicht näher dargestellten Ausführungsform umfasst das Luftleitelement 12 zwei Hälften, die in der eingefahrenen Ruhestellung A jeweils bereichsweise über ein zentrales Mittelteil geschoben sind und im Bereich einer Fahrzeugmittellängsebene H-H aneinander anliegen. In der vollständig ausgefahrenen Betriebsstellung D erstreckt sich zwischen den auseinander geschobenen Hälften das zentrale Mittelteil.

Am Luftleitelement 12 können örtlich Lufteintrittsöffnungen vorgesehen sein, damit Kühlluft zu einer dahinter liegend angeordneten Brennkraftmaschine geleitet werden kann.

Bei der erfindungsgemäßen Anordnung wird das Luftleitelement 12 über eine erste Verstellbewegung (Verschwenken oder Anheben) von einer außenhautbündigen Ruhestellung A in eine angehobene Zwischenstellung B bewegt, und danach erfolgt eine zweite Verstellbewegung des Luftleitelements 12 in Fahrzeugquerrichtung E-E in die ausgefahrene Betriebsstellung D.

In der ausgefahrenen Betriebsstellung D wird das Luftleitelement 12 durch die beiden seitlichen Verlängerungsteile 17, 18 an beiden Längsseiten jeweils um ein Maß L verbreitert.

## Patentansprüche

1. Fahrzeug mit einer Luftleitvorrichtung, (11) die in einem Heckbereich (3) des Fahrzeuges angeordnet ist und ein Luftleitelement (12) umfasst, das mittels.einer Betätigungseinrichtung von einer Ruhestellung (A), in der es in den Formverlauf des Heckbereichs (3) etwa oberflächenbündig integriert ist, in eine ausgefahrene Betriebsstellung (D) verlagerbar ist, **dadurch gekennzeichnet, dass** das Luftleitelement (12) in der ausgefahrenen Betriebsstellung (D) eine größere Quererstreckung aufweist als in der eingefahrenen Ruhestellung (A) dass das Luftleitelement (12) ein Mittelteil (16) und zwei seitlich außenliegende Verlängerungsteile (17, 18) aufweist und dass die seitlichen Verlängerungsteile (17, 18) des Luftleitelementes (12) über eine teleskopartige Schiebebewegung in Fahrzeugquerrichtung (E-E) bewegbar sind. und
dass die beiden schmalen seitlichen Verlängerungsteile (17, 18) in der eingefahrenen Ruhestellung (A) in das breitere Mittelteil (16) einschiebbar sind.

2. Fahrzeug nach Anspruch 1, **dadurch gekennzeichnet, dass** das verlagerbare Luftleitelement (12) durch einen Heckspoiler (13) gebildet wird.

3. Fahrzeug nach Anspruch 1, **dadurch gekennzeichnet, dass** das verlagerbare Luftleitelement (12) als Tragflügel ausgebildet ist.

4. Fahrzeug nach Anspruch 1, **dadurch gekennzeichnet, dass** das verlagerbare Luftleitelement (12) - in Fahrzeugquerrichtung gesehen - mehrteilig ausgebildet ist, wobei zumindest einzelne Teile (17 und 18) des Luftleitelements (12) in Fahrzeugquerrichtung (E-E) bewegbar ausgebildet sind.

5. Fahrzeug nach einem der vorangegangenen Ansprüche, **dadurch gekennzeichnet, dass** das Luftleitelement (12) zwei Hälften umfasst, die in der eingefahrenen Ruhestellung (A) bereichsweise über ein zentrales Mittelteil geschoben sind und im Bereich einer Fahrzeugmittellängsebene (H-H) aneinander anliegen, wogegen sich in der ausgefahrenen Betriebsstellung (D) das Mittelteil zwischen den beiden Hälften erstreckt.

## Claims

1. Vehicle with an air flow guiding device (11) which is arranged in a rear region (3) of the vehicle and comprises an air flow guiding element (12) which can be displaced by means of an actuating device from an inoperative position (A), in which it is integrated in the shape profile of the rear region (3) in a manner approximately flush with the surface thereof, into an extended operative position (D), **characterized in that**, in the extended operative position (D), the air flow guiding element (12) has a greater transverse extent than in the retracted inoperative position (A), and **in that** the air flow guiding element (12) has a central part (16) and two laterally outer extension parts (17, 18), and **in that** the lateral extension parts (17, 18) of the air flow guiding element (12) are movable in the transverse direction (E-E) of the vehicle via a telescopic sliding movement, and **in that**, in the retracted inoperative position (A), the two narrow lateral extension parts (17, 18) can be pushed into the wider central part (16).

2. Vehicle according to Claim 1, **characterized in that** the displaceable air flow guiding element (12) is formed by a rear spoiler (13).

3. Vehicle according to Claim 1, **characterized in that** the displaceable air flow guiding element (12) is designed as an aerofoil.

4. Vehicle according to Claim 1, **characterized in that** the displaceable air flow guiding element (12) is of multi-part design - as seen in the transverse direction of the vehicle, with at least individual parts (17 and 18) of the air flow guiding element (12) being designed such that they are movable in the transverse direction (E-E) of the vehicle.

5. Vehicle according to one of the preceding claims, **characterized in that** the air flow guiding element (12) comprises two halves which, in the retracted inoperative position (A), are pushed in some regions over a central part and bear against each other in the region of a longitudinal centre plane (H-H) of the vehicle whereas, in the extended operative position (D), the central part extends between the two halves.

## Revendications

1. Véhicule comprenant un déflecteur aérodynamique (11), qui est disposé dans une région arrière (3) du véhicule et qui comprend un élément déflecteur d'air (12) qui peut être déplacé au moyen d'un dispositif d'actionnement d'une position de repos (A) dans laquelle il est intégré approximativement en affleurement avec la surface à la forme de la région arrière (3), à une position de fonctionnement déployée (D), **caractérisé en ce que** l'élément déflecteur d'air (12) présente dans la position de fonctionnement déployée (D) une plus grande étendue transversale que dans la position de repos rentrée (A) et **en ce que** l'élément déflecteur d'air (12) présente une partie centrale (16) et deux parties de prolongement (17, 18) situées latéralement à l'extérieur, et **en ce que** les parties de prolongement (17, 18) de l'élément déflecteur d'air (12) peuvent être déplacées par le biais d'un mouvement de glissement de type télescopique dans la direction transversale du véhicule (E-E), et **en ce que** les deux parties de prolongement (17, 18) latérales étroites peuvent être enfoncées dans la position de repos rentrée (A) dans la partie centrale plus large (16).

2. Véhicule selon la revendication 1, **caractérisé en ce que** l'élément déflecteur d'air déplaçable (12) est formé par un spoiler arrière (13).

3. Véhicule selon la revendication 1, **caractérisé en ce que** l'élément déflecteur d'air déplaçable (12) est réalisé sous forme d'aile portante.

4. Véhicule selon la revendication 1, **caractérisé en ce que** l'élément déflecteur d'air déplaçable (12), vu dans la direction transversale du véhicule, est réalisé en plusieurs parties, au moins des parties individuelles (17 et 18) de l'élément déflecteur d'air (12) étant réalisées de manière déplaçable dans la direction transversale du véhicule (E-E).

5. Véhicule selon l'une quelconque des revendications précédentes, **caractérisé en ce que** l'élément déflecteur d'air (12) présente deux moitiés, qui sont poussées dans la position de repos (A) rentrée en partie par-dessus une partie centrale et qui s'appliquent l'une contre l'autre dans la région d'un plan médian longitudinal du véhicule (H-H), tandis que dans la position de fonctionnement déployée (D), la partie centrale s'étend entre les deux moitiés.
